# EUROPEAN PATENT SPECIFICATION

(11) **EP 3 000 865 B1**
(45) Date of publication and mention of the grant of the patent: **14.03.2018**
(21) Application number: 14801705.6
(22) Date of filing: 11.04.2014
(51) Int. Cl.: C10J 3/46, B09B 3/00, C01B 3/58, C10K 3/02

(54) **METHOD FOR CONVERTING THE RDF FRACTION INTO A SYNTHESIS GAS**
VERFAHREN ZUR UMWANDLUNG DER RDF-FRAKTION IN EIN SYNTHESEGAS
PROCÉDÉ DE CONVERSION DE COMBUSTIBLE DERIVÉ DE DÉCHETS EN UN GAZ DE SYNTHÈSE

(30) Priority: 21.05.2013 ES 201330729
(43) Date of publication of application: 30.03.2016
(73) Proprietor: Urbaser, S.A., 28031 Madrid (ES)
(72) Inventor: BILBAO DUÑABEITIA, Rafael, 50005 Zaragoza (ES); ARAUZO PÉREZ, Jesús María, 50009 Zaragoza (ES); GUERRERO ÁLVAREZ, Marta, E-28031 Madrid (ES); GALA BURO, Alberto Jesús, 50021 Zaragoza (ES); ARTIGAS AYALA, Alfonso, E-28031 Madrid (ES); FERNÁNDEZ GIMÉNEZ, Eduardo, E-28031 Madrid (ES)
(74) Representative: Garrido Pastor, José Gabriel
(86) International application number: PCT/ES2014/070302
(87) International publication number: WO 2014/188028

(56) References cited:
- EP-A1- 0 801 218
- ES-A1- 2 265 766
- ES-T3- 2 073 807
- US-A1- 2006 137 579
- US-A1- 2010 181 539
- HERNANDEZ-ATONAL F.D. ET AL.: 'Combustion of refuse-derived fuel in a fluidised bed' 15 September 2006, XP005773263 Retrieved from the Internet: <URL:http://www.aseanenvironment.info/abstr act/41014553.pdf>
- DALAI A K ET AL.: 'Gasification of refuse derived fuel in a fixed bed reactor for syngas production' WASTE MANAGEMENT vol. 29, no. 1, 01 January 2009, pages 252 - 258, XP025654936

## Description

### Object of the Invention

The present invention relates to a method for producing a synthesis gas from municipal solid waste (MSW) and, more particularly, from the fraction thereof called refuse-derived fuel (RDF).

### Background of the Invention

The global treatment of MSW includes operations aimed at recycling, recovery and removal of the materials contained in the refuse, this order being priority according to European regulations.

Therefore, MSW plants are designed and built for the purpose of achieving maximum utilization of the refuse through processes and technologies developing the mentioned operations.

One way of valorizing MSW is by valorizing its RDF fraction by means of gasification. The RDF fraction can constitute up to 30% of the materials forming the reject from a conventional MSW management plant and its heating capacity is greater than 19000 kJ/kg.

Gasification is a thermochemical process in which a generally solid carbonaceuous feedstock is converted into a gas with a moderate heating capacity, for the purpose of producing "synthesis gas", which can be used in internal combustion engines, turbines or in other heat- and power-producing equipment.

The carbon and biomass gasification process is well established for both combustible gas production and for valuable raw material production. However, the application of this technology for energy recovery from the RDF fraction has not been developed as much. In this context, the purpose of the invention is to improve and adapt different aspects of the gasification process to such material.

Patent document EP1431373 describes a gasification process in two stages at a high and a low temperature. This application does not describe the specific manner of performing this method in the event that it is fed with the RDF fraction.

Patent application US2010051875 describes a method for producing synthesis gas by gasification in a fluidized bed reactor and subsequent conditioning thereof for producing a synthesis gas with an H₂/CO ratio suitable for producing given chemicals. The step of gasification is carried out at a temperature less than 750°C and at a pressure less than 10 atm. Is considered the possibility of subjecting the synthesis gas coming from the step of absorption to a catalytic reforming process for the purpose of converting light hydrocarbons.

Patent application US2010/181539 relates to the production of synthesis gas with the use of indirect gasification technology, such as dual fluidized bed gasification. Said technology involves the use of a fluid bed gasifier and a fluid bed combustor operable to combust fuel and oxidant.

The mentioned patent documents do not describe the method of the present invention, which was developed for using the RDF fraction as feedstock for the gasification process, the method of gasification taking place in a single step and performing the catalytic reforming process for the purpose of reducing heavy hydrocarbons (tars) in the synthesis gas, recovering the energy contained therein.

### Description of the Invention

The present invention relates to a method for producing a synthesis gas from the gasification of municipal solid waste (MSW) and, more particularly, from the fraction thereof called refuse-derived fuel (RDF).

Mechanical separation of materials, composting and/or methanization of the fraction organic, and finally the recovery and/or removal of the remaining waste are carried out in conventional MSW treatment plants. The fraction that could not be recycled or recovered in the plant constitutes the reject. This reject, which is between 50% and 60% of the total MSW managed in a conventional plant, is taken to a landfill. Sometimes the landfill is located far away from the facility, so transport costs for the step of removal increase considerably. Within the material making up the reject there is a fraction with a heating capacity significant referred to as RDF.

The present invention describes a method for recovering a fraction of MSW, specifically the gasification of the RDF fraction in a fluidized bed, and the catalytic reforming process with water vapor for the removal of the tars contained in the synthesis gas generated.

As previously mentioned, one of the advantages of the present method is the utilization of the RDF fraction of MSW which was sent to a landfill up until now and which can constitute up to 30% of the materials forming the MSW reject.

The RDF fraction gasification process is presented as an alternative to the current management model capable of providing important improvements from the environmental and energy point of view. The integration of an RDF fraction gasification plant in a conventional MSW treatment plant would entail important environmental and energy improvements, such as: reduction of the amount of refuse sent to a landfill; incorporation into the recovery chain of a non-biodegradable material; energy diversification and reduction of the country's dependence on foreign nations; adaptation of gasification technology to a material subjected to little study (RDF) for producing a synthesis gas with various applications, between them energy utilization and chemical synthesis (methanol, gasoline, hydrogen, second generation fuels, etc.).

The present invention uses oxygen-enriched air as a gasifying agent, maintaining the same fluid dynamic conditions as in the case of using air as a gasifying agent. This provides the advantage of an increase in the processing capacity, allowing greater removal and utilization of refuse, as well as a noticeable improvement in the heating capacity and quality of the synthesis gas produced.

For direct use of the synthesis gas produced by gasification of the RDF fraction in efficient energy cycles, it is necessary to perform the conditioning and cleaning thereof primarily for the purpose of removing tars and other impurities. This direct use is complex in RDF fraction gasification processes, essentially due to the enormous heterogeneity of this waste and the presence of contaminating substances, such as alkaline elements, chlorine, sulfur, heavy metals and other compounds such as additives, reinforcements or fillers of plastic materials. In addition to these impurities, the synthesis gas produced also includes tars, ammonia, hydrogen sulfur, solid particles, water, etc.

The present invention provides an improved method for immediate conditioning of synthesis gas by means of the catalytic reforming process with water vapor, for subsequent direct use thereof in efficient energy cycles, addressing one of the main problems, which is the presence of the tars generated during the gasification process.

Therefore, the invention relates to a method for converting the RDF fraction into a synthesis gas comprising the steps of:
a) gasifying the RDF fraction in a bubbling fluidized bed gasifier at atmospheric pressure and at a temperature comprised between 750°C and 850°C, in the presence of a gasifying and fluidizing agent, wherein the gasifying agent is oxygen-enriched air; and
b) separating the particles and fly ash from the synthesis gas generated in step a); and
c) introducing the gas, after separating the particles, into a reactor where catalytic reforming takes place with water vapor from tars and other hydrocarbons present in the gas.

### Detailed Description of the Invention

The present invention relates to a method for converting the RDF fraction into a synthesis gas comprising the steps of:
a) gasifying the RDF fraction in a bubbling fluidized bed gasifier at atmospheric pressure and at a temperature comprised between 750°C and 850°C, in the presence of a gasifying and fluidizing agent; and
b) separating the particles and fly ash from the synthesis gas generated in step a); and
c) introducing the gas, after separating the particles, in a reactor where catalytic reforming takes place with water vapor from tars and other hydrocarbons present in the gas.

The term "RDF fraction", as it is used in the present invention, relates to the fraction separated from the reject of a conventional municipal solid waste treatment plant having significant heating capacity (about 19000 kJ/kg). The RDF fraction is primarily made up of plastic, textile, paper and cardboard, organic matter and foreign body refuse.

The RDF fraction is fed to the fluidized bed gasifier preferably in the form of pellets. More preferably, the size of the diameter of the pellet is comprised between 6 mm and 15 mm, and the length of the pellet is comprised between 40 mm and 100 mm. Preferably, the moisture content must not exceed 5% by weight with respect to the total weight of the pellets. The fluidized bed gasifier of step a) is a bubbling fluidized bed gasifier. Preferably, the fluidized bed is a silica sand bed with a particle diameter in the range of 350 µm to 1000 µm.

In order to keep the height of the fluidized bed constant, since during the gasification process part of it is lost with the extracted inert material, the ratio of the amount of the RDF fraction to sand fed into the reactor is between 4.5 and 5.

Preferably, gasification conditions comprise equivalence ratios in the range of 0.20 to 0.30, the equivalence ratio being the ratio of the amount of oxygen fed into gasifier to the amount of oxygen necessary for complete combustion of the material. The gasification temperature reached in steady-state will correspond to the established equivalence ratio.

According to the present invention, the use of oxygen-enriched air preferably in a percentage with respect to the total comprised between 27% and 40% as a gasifying agent is considered. The use of oxygen-enriched air as a gasifying agent provides a surprising improvement in the RDF fraction gasification process, which consists of the increase in the refuse processing capacity and a noticeable improvement in the heating capacity and quality of the gas produced, maintaining the same fluid dynamic conditions as in the case of using air as a gasifying agent.

Preferably, the gasifying and fluidizing agent is introduced at a speed comprised between 6 to 8 times greater than the minimum fluidization speed of the sand bed.

The hot gas coming out of the gasification reactor is subjected to a cleaning and conditioning process comprising steps b) and c).

Preferably, separating the particles of step b) is performed in a cyclone.

Preferably, the catalytic reforming reactor in step c) comprises a bed made up of a metal catalyst and, more particularly, of nickel, palladium, ruthenium, platinum or combinations thereof. Preferably, the temperature in the catalytic reforming reactor is between 750°C and 850°C. This method of cleaning the gas, step c), is endothermic.

Preferably, step c) is carried out in a multitubular reactor. the catalytic bed through which the synthesis gas passes is placed inside the tubes, and a stream of water vapor is fed to prevent deactivation of the catalyst due to coke deposition.

### Example 1

The present example describes the operation of an RDF fraction gasification plant and catalytic reforming of tars and other hydrocarbons present in the synthesis gas coming from the gasifier.

To start up the gasifier, a step of pre-heating the fluidized bed to a temperature of 480°C is required. Once this temperature is reached,' the RDF fraction is fed in the form of pellets under combustion conditions until reaching a temperature of about 800°C in the fluidized bed. At that time, the operating conditions are changed to the gasification regimen conditions, and pellets of the RDF fraction continue to be fed into the gasifier.

During operation of the gasifier, tests have been performed using air and oxygen-enriched air as a gasifying agent.

Table 1 shows how an increase in the 21% to 39% concentration of oxygen in the oxygen-enriched air allows processing virtually twice the amount of materials (RDF fraction pellets), which also entails an important increase in the thermal power produced. This clearly shows the surprising improvement involved with the use of enriched air for the thermochemical processing of the RDF fraction by gasification.

**Table 1. Effect of the use of oxygen-enriched air in RDF fraction gasification with an equivalence ratio of 0.215**

| Concentration of O₂ in the enriched air (% vol) | kg of enriched air RDF / kg of air RDF | PCI gas (lower heating capacity (kJ/m³N)) | kWt* enriched air/kWt* air |
|---|---|---|---|
| 21 | 1 | 5472 | 1 |
| 24 | 1.14 | 5618 | 1.04 |
| 27 | 1.29 | 6354 | 1.23 |
| 31 | 1.47 | 7445 | 1.52 |
| 35 | 1.67 | 8130 | 1.76 |
| 39 | 1.86 | 8774 | 1.90 |

| | | | |
|---|---|---|---|
| *kWt calculated from flow rate of the outlet gas exiting the gasifier free of tars due to the heating capacity | | | |

The synthesis gas exiting the gasifier first goes through a cyclone where most of the particles and fly ash are removed, and then it is introduced in a fixed-bed reactor where catalytic reforming is carried out with water vapor from tars and other hydrocarbons, producing hydrogen, carbon monoxide and carbon dioxide. The fixed bed is made up of nickel catalyst rings SG 9301 (marketed for reforming naphthas), supplied by the company BASF Nederland B.V. The active agent is nickel and the support is primarily formed by a mixture of Al₂O₃ and CaO in the proportions indicated in Table 2.

**Table 2, Composition of catalyst SG 9301**

| Component | % (by weight) |
|---|---|
| NiO | 10-15 |
| Al₂O₃ | 70-75 |
| CaO | 5-10 |
| Lanthanum oxide | 1-5 |
| SiO₂ | < 0.1 |

The catalytic reforming process is carried out in a multitubular reactor made up of AISI 310 S steel tubes having an inner diameter of 140 mm, 12 m in length and 10 mm thick. The catalytic bed through which the synthesis gas passes is placed inside the tubes, and a stream of water vapor is fed to prevent deactivation of the catalyst due to coke deposition.

The assembly of tubes is placed inside an AISI 310 S steel casing through which there circulate outlet gases from a combustion boiler in which natural gas and 15% of the synthesis gas coming from the step of RDF fraction gasification are burned.

These outlet gases enter the casing at a temperature of 1050°C, and the flow rate of this stream provides the heat necessary for carrying out catalytic reforming, because it is a highly endothermic process. The use of nickel catalyst SG 9301 for catalytic reforming of tars under the operating conditions indicated above furthermore provides another key and novel effect for the process of cleaning the synthesis gas, because it allows significantly reducing the amount of ammonia. This aspect is fundamental for the use of synthesis gas in combustion engines, such that legal limit NOₓ emission values are complied with.

Two gas streams are extracted from the multitubular reactor, i.e., on one hand the reformed synthesis gas and on the other the outlet gases from the combustion boiler used to reach the operating temperature of the catalytic bed.

The reformed synthesis gas is taken to a phase separator, where the non-reformed tars as well as other contaminants, including particles, chlorine, etc., are removed. The phase separator consists of a Venturi-type washer and a countercurrent water spray tower, followed by a drop separator.

The outlet gas from the phase separator (free of tars and other impurities and at a temperature less than 40°C) is fed to several reciprocating engines connected in parallel.

The exhaust gases from the reciprocating internal combustion engines, together with the outlet gases from the combustion boiler used to reach the operating temperature of the catalytic bed, are taken to a recovery boiler with a steam turbine to recover the energy contained therein.

Table 3 shows the tar conversion values obtained during the catalytic reforming process under different operating conditions. With respect to the influence of the temperature of the fixed-bed catalytic reactor (Table 3, Experiments 1-3) it has been proven that tar conversion significantly increases when temperature increases. On the other hand, it has been found that space-time plays an important role in tar conversion during the catalytic reforming process (Table 3, Experiments 4-7), reaching a tar conversion value of 85% for a space-time of W/ṁₜₐᵣ = 0.942 kg·min/g (where W is the weight of catalyst and ṁₜₐᵣ is the mass flow of tars at the inlet of the catalytic reforming reactor). Another important operating variable in the catalytic reforming process is the molar ratio between the water vapor and the carbon contained in the tars and hydrocarbons to be reformed (Table 3, Experiments 8-11). The value of this ratio does not affect tar conversion but it is important to establish an optimal value to prevent coke deposition on the catalyst surface and the subsequent deactivation of said catalyst.

**Table 3. Tar conversion obtained during the catalytic reforming process under different operating conditions.**

| Experiment | Temperature of catalytic reforming reactor (°C) | H₂O (v) /C molar ratio | Space-time "Mₜₐᵣ" W/ (kg ·min/g) | Xₜₐᵣ (%) |
|---|---|---|---|---|
| 1 | 750 | .40 | 0.348 | 52.7 |
| 2 | 800 | 0.4 | 0.383 | 64.1 |
| 3 | 850 | 0.4 | 0.374 | 66.8 |
| 4 | 850 | 0.4 | 0.188 | 22.3 |
| 5 | 850 | 0.4 | 0.374 | 66.8 |
| 6 | 850 | 0.4 | 0.663 | 75.5 |
| 7 | 850 | 0.4 | 0.942 | 85.3 |
| 8 | 850 | 0.4 | 0.374 | 66.8 |
| 9 | 850 | 1.5 | 0.375 | 65.8 |
| 10 | 850 | 2.5 | 0.378 | 70.1 |
| 11 | 850 | 3.5 | 0.381 | 66.3 |

## Claims

1. A method for converting a refuse-derived fuel fraction into a synthesis gas comprising the steps of:
a) gasifying the refuse-derived fuel fraction in a bubbling fluidized bed gasifier at atmospheric pressure and at a temperature comprised between 750°C and 850°C, in the presence of a gasifying and fluidizing agent, wherein the gasifying agent is oxygen-enriched air; and
b) separating the particles and fly ash from the synthesis gas generated in step a); and
c) introducing the gas, after separating the particles, into a reactor where catalytic reforming takes place with water vapor from tars and other hydrocarbons present in the gas.

2. The method according to claim 1, **characterized in that** the refuse-derived fuel fraction is fed in the form of pellets.

3. The method according to claim 2, **characterized in that** the size of the diameter of the pellet is comprised between 6 mm and 15 mm, and the length of the pellet is comprised between 40 mm and 100 mm.

4. The method according to claim 2, where the pellets have a moisture content inferior al 5% by weight with respect to the total weight of the pellets.

5. The method according to claim 1 **characterized in that** the fluidized bed is a silica sand bed with a particle diameter in the interval comprised between 350µm and 1000µm.

6. The method according to any of the claims 1 to 5 **characterized in that** the gasifying agent is oxygen-enriched air in a percentage with respect to the total comprised between 27% and 40%.

7. The method according to claim 5, **characterized in that** the gasifying and fluidization agent is introduced at a speed comprised between 6 to 8 times greater at the minimum fluidization speed of the sand bed.

8. The method according to any of claims 1 to 7, **characterized in that** the catalytic bed is made up of a metal catalyst, the metal being selected from nickel, palladium, ruthenium, platinum or combinations thereof.

9. The method according to claim 8, **characterized in that** the temperature in the catalytic reforming reactor is between 750°C and 850°C.

## Patentansprüche

1. Verfahren zur Umwandlung einer Brennstoff aus Müll-Fraktion in ein Synthesegas umfassend die folgenden Schritte:
a) die Vergasung der Brennstoff aus Müll-Fraktion in einem blasenbildenden Wirbelbettvergaser unter atmosphärischem Druck und bei einer Temperatur, welche zwischen 750°C und 850°C liegt, in Anwesenheit eines Vergasungs- und Verwirbelungsmittels, wobei das Vergasungsmittel sauerstoffangereicherte Luft ist; und
b) die Trennung der Partikel und der Flugasche aus dem in Schritt a) erzeugten Synthesegas; und
c) die Einführung des Gases, nach der Trennung der Partikel, in einen Reaktor, in welchem das katalytische Reformieren mit Wasserdampf aus Teeren und anderen im Gas vorhandenen Kohlenwasserstoffen stattfindet

2. Verfahren nach Anspruch 1, **dadurch gekennzeichnet, dass** die Brennstoff aus Müll-Fraktion in Form von Pellets gespeist wird

3. Verfahren nach Anspruch 2, **dadurch gekennzeichnet, dass** die Größe des Durchmessers des Pellets zwischen 6 mm und 15 mm liegt, und die Länge des Pellets zwischen 40 mm und 100 mm liegt

4. Verfahren nach Anspruch 2, wobei die Pellets einen Feuchtigkeitsgehalt niedriger als 5 Gew.-% in Bezug auf das Gesamtgewicht der Pellets aufweisen.

5. Verfahren nach Anspruch 1, **dadurch gekennzeichnet, dass** das Wirbelbett ein Bett aus kieselsäurehaltigem Sand ist, mit einem Partikeldurchmesser im Bereich, welcher zwischen 350 µm und 1000 µm liegt.

6. Verfahren nach einem der Ansprüche 1 bis 5, **dadurch gekennzeichnet, dass** das Vergasungsmittel sauerstoffangereicherte Luft ist, in einem Anteil in Bezug auf die Gesamtmenge, welcher zwischen 27% und 40% liegt

7. Verfahren nach Anspruch 5, **dadurch gekennzeichnet, dass** das Vergasungs- und Verwirbelungsmittel bei einer Geschwindigkeit eingeführt wird, welche zwischen 6 und 8 Mal höher als die minimale Verwirbelungsgeschwindigkeit des Sandbetts ist

8. Verfahren nach einem der Ansprüche 1 bis 7, **dadurch gekennzeichnet, dass** das katalytische Bett aus einem metallischen Katalysator besteht, wobei das Metall aus Nickel, Palladium, Ruthenium, Platin oder Kombinationen derselben ausgewählt wird

9. Verfahren nach Anspruch 8, **dadurch gekennzeichnet, dass** die Temperatur im katalytischen Reformierungsreaktor zwischen 750°C und 850°C liegt.

## Revendications

1. Procédé de conversion d'une fraction de combustible dérivé de déchets en un gaz de synthèse comprenant les étapes de :
a) gazéification de la fraction de combustible dérivé de déchets dans un gazéifieur à lit fluidisé bouillonnant à pression atmosphérique et à une température comprise entre 750°C et 850°C, en présence d'un agent de gazéification et de fluidisation, dans lequel l'agent de gazéification est de l'air enrichi en oxygène ; et
b) séparation des particules et de cendres volantes du gaz de synthèse généré lors de l'étape a) ; et
c) introduction du gaz, après la séparation des particules, dans un réacteur où a lieu le reformage catalytique avec de la vapeur d'eau à partir des goudrons et d'autres hydrocarbures présents dans le gaz.

2. Procédé selon la revendication 1, **caractérisé en ce que** la fraction de combustible dérivé de déchets est alimentée sous forme de pellets.

3. Procédé selon la revendication 2, **caractérisé en ce que** la dimension du diamètre du pellet est compris entre 6 mm et 15 mm, et la longueur du pellet est comprise entre 40 mm et 100 mm

4. Procédé selon la revendication 2, où les pellets ont un contenu en humidité inférieur à 5% en poids par rapport au poids total des pellets.

5. Procédé selon la revendication 1, **caractérisé en ce que** le lit fluidisé est un lit de sable siliceux avec un diamètre de particule dans l'intervalle compris entre 350 µm et 1.000 µm.

6. Procédé selon l'une quelconque des revendications 1 à 5, **caractérisé en ce que** l'agent de gazéification est de l'air enrichi en oxygène dans un pourcentage par rapport au total compris entre 27% et 40%.

7. Procédé selon la revendication 5, **caractérisé en ce que** l'agent de gazéification et de fluidisation est introduit à une vitesse comprise entre 6 et 8 fois supérieure à la vitesse de fluidisation minimale du lit de sable.

8. Procédé selon l'une quelconque des revendications 1 à 7, **caractérisé en ce que** le lit catalytique est constitué d'un catalyseur métallique, le métal étant choisi parmi le nickel, le palladium, le ruthénium, le platine ou des combinaisons de ceux-ci

9. Procédé selon la revendication 8, **caractérisé en ce que** la température dans le réacteur de reformage catalytique se trouve entre 750°C et 850°C.
